# FASCICULE DE BREVET EUROPEEN

(11) **EP 0 735 969 B1**
(45) Date de publication et mention de la délivrance du brevet: **05.02.1997**
(21) Numéro de dépôt: 95904567.5
(22) Date de dépôt: 19.12.1994
(51) Int. Cl.: B64B 1/00

(54) **INSTALLATION D'ATTERRISSAGE D'UN BALLON CAPTIF**
VERANKERUNGSVORRICHTUNG FÜR EINEN FESSELBALLON
APPARATUS FOR LANDING A TETHERED BALLOON

(30) Priorité: 22.12.1993 FR 9315709
(43) Date de publication de la demande: 09.10.1996
(73) Titulaire: Gobbi, Matthieu, F-75116 Paris (FR); Giacomoni, Jérôme, F-75016 Paris (FR)
(72) Inventeur: Gobbi, Matthieu, F-75116 Paris (FR); Giacomoni, Jérôme, F-75016 Paris (FR)
(74) Mandataire: Desrousseaux, Grégoire Marie
(86) Numéro de dépôt international: FR9401488
(87) Numéro de publication internationale: WO9517333

(56) Documents cités:
- US-A- 4 126 850
- US-A- 4 762 295

## Description

La présente invention a pour objet un ballon captif et son installation d'atterrissage, le ballon captif étant ramené au sol au moyen d'un câble de rappel. Elle concerne plus particulièrement un ballon captif conçu pour atterrir au sol sur une plate-forme d'atterrissage, dans une position centrée par rapport à l'axe vertical de sortie du câble de rappel.

Dans le présent texte, le terme "ballon" désigne un ballon à gaz constitué d'une enveloppe hermétique, qui contient un gaz moins dense que l'air, et qui peut plus particulièrement être emprisonnée dans un filet ; ce filet est en outre solidaire d'un cadre de charge, auquel est suspendue une nacelle. La nacelle permet l'embarquement de passagers à bord du ballon.

Un ballon captif est un ballon qui est relié au sol. Selon un premier type connu de ballon captif, le ballon est conçu de manière à pouvoir toujours être en équilibre avec l'atmosphère, et est relié au sol au moyen de cordes de rappel. La fonction de ces cordes de rappel est uniquement de contrer les effets de déviation du vent, en retenant le ballon dans un espace situé à l'aplomb d'une zone d'atterrissage au sol , dégagée et comprise entre les points d'attache des cordes de rappel. Dans ce cas, le ballon s'élève dans les airs et revient au sol par ses propre moyens ; la nacelle du ballon se pose dans cette zone d'atterrissage, au grès du vent.

Selon un second type connu de ballon captif, le ballon est conçu de telle sorte qu'il a constamment tendance à s'élever dans les airs. Dans ce cas, il est ramené vers le sol, au moyen d'un câble de rappel, qui traverse la nacelle en son centre, et dont une extrémité est reliée au cadre de charge. L'autre extrémité du câble de rappel s'enroule sur un système de treuil, qui est monté dans une cuvette, pratiquée dans le sol. Cette cuvette a uniquement pour fonction de servir de logement au système de treuil. Dans ce second type de ballon captif, la nacelle ne se pose jamais au sol, mais reste suspendue à quelque mètres au-dessus de la cuvette ; les passagers embarquent dans la nacelle grâce à une passerelle.

On comprend aisément que dans le cas d'un ballon captif du second type, l'embarquement des passagers à bord de la nacelle est malaisé, et dangereux pour les passagers, du fait de la très grande instabilité de la nacelle, principalement en présence de vent. Afin de pallier cet inconvénient, le premier but de la présente invention est de proposer un ballon captif du second type, qui est conçu pour se poser sur une plate-forme d'atterrissage au sol.

Lors des mouvements d'ascension et de descente d'un ballon captif du second type, on observe une légère déviation du ballon, due au vent, le câble de rappel n'étant plus vertical. Par conséquent, dans l'hypothèse où l'on cherche à faire atterrir la nacelle d'un ballon captif du second type sur une plate-forme d'atterrissage qui recouvre la cuvette contenant le système de treuil, lorsque le ballon captif est ramené au sol, la nacelle arrive sur cette plate-forme en étant décentrée par rapport à l'axe vertical de sortie du câble de rappel. Si la plate-forme est plane, le ballon captif atterrit et reste dans cette position décentrée. Il est à noter que pendant toute la descente du ballon, la nacelle reste dans une position sensiblement horizontale. Si aucune disposition particulière n'est prise pour recentrer la nacelle, il arrive que les mouvements du ballon, sous les effets du vent, et notamment ceux dus à une inversion du sens du vent, remettent en tension les suspentes reliant la nacelle et le cadre de charge, et entraînent par là-même la nacelle. Ces mouvements intempestifs de nacelle posée sur la plate-forme d'atterrissage sont préjudiciables au bon embarquement ou débarquement des passagers qui risquent de se blesser.

Un deuxième but de la présente invention est donc de proposer une installation d'atterrissage d'un ballon captif du second type, qui permet d'obtenir un atterrissage de la nacelle du ballon captif dans une position centrée par rapport à l'axe vertical de sortie du câble de rappel.

Ces différents buts sont parfaitement atteints par la ballon captif et son installation d'atterrissage selon l'invention. De manière connue, le ballon captif est ramené vers le sol au moyen d'un câble de rappel, et comprend une nacelle qui est évidée en son centre pour permettre le passage du câble de rappel ; l'installation d'atterrissage comporte des moyens d'enroulement et de déroulement du câble de rappel, qui sont montés dans une cavité du sol.

De manière caractéristique selon l'invention, l'installation d'atterrissage comprend en outre une plate-forme d'atterrissage recouvrant la cavité, et comprenant une ouverture à travers laquelle passe le câble de rappel, et qui est centrée sur l'axe vertical de sortie du câble de rappel ; la plate-forme d'atterrissage consiste en la surface courbe d'au moins un tronc de cône droit, qui se prolonge en contrebas par une zone d'atterrissage annulaire sensiblement horizontale, et qui est centré sur l'axe vertical de sortie du câble de rappel ; la nacelle du ballon captif est équipée d'au moins trois roues articulées, qui sont fixées sous la nacelle dans une zone annulaire de même dimension que la zone d'atterrissage.

Dans l'installation de l'invention, l'atterrissage de la nacelle peut se décomposer en trois phases successives. Pendant les deux premières phases, les suspentes reliant la nacelle au cadre de charge sont toujours tendues, et la nacelle est constamment suspendue au cadre de charge, qui est tiré vers le sol par le câble de rappel. Dans la première phase, la nacelle arrive à l'aplomb de la plate-forme d'atterrissage, dans une position sensiblement horizontale mais décentrée par rapport à l'axe vertical de sortie du câble de rappel ; aucune des roues de la nacelle n'est encore en contact avec la plate-forme. Dans la deuxième phase, au moins une des roues articulées de la nacelle vient en contact avec la surface courbe d'un tronc de cône ; la nacelle poursuit sa descente sous les effets combinés de la traction du câble de rappel et de la gravité, en étant dirigée par cette roue articulée à la surface du tronc de cône, en direction de la zone d'atterrissage située en contrebas, jusqu'à ce que toutes les roues articulées de la nacelle viennent en contact avec la zone d'atterrissage. A la fin de cette deuxième phase, la nacelle se trouve dans une position centrée par rapport à l'axe vertical de sortie du câble. Dans une troisième phase, on continue à enrouler le câble de rappel en sorte de détendre toutes les suspentes reliant la nacelle au cadre de charge. Les mouvements du ballon sous l'effet du vent peuvent alors se faire sans mettre en tension les suspentes. La nacelle est parfaitement immobilisée sur la zone d'atterrissage.

Dans un premier mode particulier de réalisation, la surface courbe de la plate-forme d'atterrissage correspond à la surface intérieure d'un tronc de cône droit, creux et orienté vers le bas.

Dans une deuxième mode particulier de réalisation, la surface courbe de la plate-forme d'atterrissage correspond à la surface extérieure d'un tronc de cône droit orienté vers le haut ; dans ce cas, l'évidement de la nacelle pour le passage du câble de rappel doit également être suffisant pour que la nacelle puisse être traversée par ce tronc de cône, au cours de la deuxième phase de l'atterrissage.

Dans un mode préféré de réalisation, combinant les deux modes particuliers précités, les deux troncs de cônes sont concentriques ; la surface courbe extérieure du tronc de cône orienté vers le haut, dit tronc de cône intérieur, et la surface courbe intérieure du tronc de cône orienté vers le bas, dit tronc de cône extérieur, sont reliées par une unique zone d'atterrissage annulaire.

Avantageusement, dans ce mode préféré de réalisation, lorsque les deux troncs de cône intérieur et extérieur ont la même conicité, la nacelle est de préférence équipée d'au moins deux paires de roues articulées, qui sont fixées sous la nacelle selon un cercle, dont le diamètre est égal à la distance inter-cônes, les deux roues d'une même paire étant diamétralement opposées. On désigne ici par distance inter-cônes, la distance maximale, prise dans un plan horizontal, entre les surfaces courbes des deux troncs de cône. Ainsi, au cours de la deuxième phase d'atterrissage, lorsque deux roues diamétralement opposées sont en contact avec la plate-forme d'atterrissage en étant alignées avec l'axe vertical de sortie du câble de rappel, l'une d'entre elles vient en contact avec la surface courbe de l'un des deux troncs de cône, par exemple le tronc de cône extérieur, tandis que l'autre vient en contact avec la surface courbe du deuxième tronc de cône, par exemple le tronc de cône intérieur. La nacelle est donc parfaitement maintenue à l'horizontale, à la surface des deux troncs de cône, par ces deux roues qui sont situées dans un même plan horizontal, et poursuit sa descente en direction de la zone d'atterrissage en restant dans cette position. Le recentrage du ballon captif au cours de la deuxième phase d'atterrissage est réalisé avec une très bonne stabilité de la nacelle.

Plus particulièrement, afin que le recentrage du ballon captif soit précis, et que les roues de la nacelle soient bloquées en position par les surfaces courbes intérieure et extérieure des deux troncs de cône extérieur et intérieur quand la nacelle est posée sur la zone d'atterrissage, lesdites surfaces sont sécantes selon un cercle qui correspond à la zone d'atterrissage. Dans ce cas, la distance inter-cônes correspond au diamètre de ce cercle.

Afin d'obtenir une répartition optimale du poids de la nacelle sur les roues articulées, la base de la nacelle est un polygone régulier à n sommets , et est équipée de n roues articulées, qui sont fixées sur les diagonales du polygone. De préférence, les roues articulées seront fixées sur le cercle inscrit dans le polygone, et il s'agira d'un octogone.

D'autres caractéristiques et avantages de l'invention ressortiront de la description suivante d'un mode préféré de réalisation d'une installation d'atterrissage d'un ballon captif selon l'invention, laquelle est donnée à titre d'exemple non limitatif, et en référence aux dessins annexés sur lesquels :
- la figure 1 est une représentation schématique d'une installation d'atterrissage d'un ballon captif, comportant une plate-forme d'atterrissage plane.
- la figure 2 est une vue de dessus simplifiée de la plate-forme d'atterrissage et de la nacelle octogonale du ballon captif d'une installation d'atterrissage de l'invention,
- la figure 3 est une vue de côté de la nacelle de la figure 2,
- la figure 4 est une vue en section de la plate-forme d'atterrissage et de la nacelle de l'installation d'atterrissage de l'invention, lorsque la nacelle est dans sa phase finale d'approche de la plate-forme d'atterrissage,
- la figure 5 est une vue en section de la plate-forme d'atterrissage et de la nacelle de l'installation d'atterrissage de l'invention, lorsque la nacelle est posée sur la zone d'atterrissage, en contrebas de l'ouverture de sortie du câble de rappel,
- et la figure 6 est une représentation schématique d'un autre profil possible pour la plate-forme d'atterrissage d'une installation de l'invention.

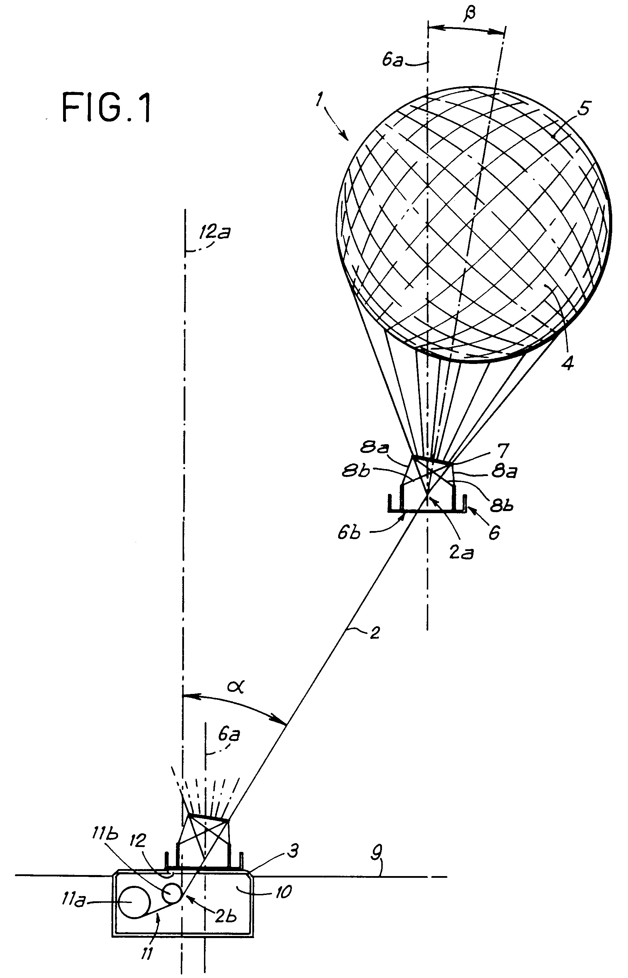

Si l'on se réfère à la figure 1, un type actuellement connu de ballon captif consiste en un ballon 1, qui peut être ramené vers le sol 9 au moyen d'un câble de rappel 2. La ballon 1 comprend une enveloppe hermétique 4, qui est emprisonnée dans un filet 5, et une nacelle 6, qui est suspendue à un cadre de charge 7, solidaire du filet 5. En pratique, l'enveloppe hermétique 4 contient de l'hélium et un ballonnet d'air sous pression, de telle sorte que le ballon 1 subit toujours une force ascensionnelle, encore appelée portance, et a toujours tendance à s'élever dans les airs par ses propres moyens. La nacelle 6 est reliée au cadre de charge 7 au moyen de suspentes courtes 8a, et de suspentes croisées 8b , dites suspentes de contreventement. La nacelle 6 est un solide de révolution d'axe central de symétrie 6a, et qui est évidé en son centre, de manière à permettre le passage du câble de rappel 2, quelle que soit l'inclinaison pouvant être prise par ce câble. Dans le sol 9 a en outre été pratiquée une cavité 10, qui sert de logement à un système de treuil 11, comportant un tambour principal 11a commandé en rotation, et une poulie de renvoi 11b. Une première extrémité 2a du câble de rappel 2 passe à travers le fond 6b de la nacelle 6, et est fixée de façon symétrique, sur toute la périphérie du cadre de charge 7. L'autre extrémité 2b vient s'enrouler sur le tambour principal 11a, par l'intermédiaire de la poulie de renvoi 11 b. On désigne dans le présent texte par axe vertical de sortie du câble de rappel 2, l'axe vertical 12a qui est tangent à la périphérie de la poulie de renvoi 11b et qui correspond par conséquent à la position verticale pouvant être prise par le câble de rappel 2.

Actuellement, le ballon captif qui vient d'être décrit n'est pas conçu pour se poser sur le sol, mais reste suspendu dans les airs, à quelque mètres au-dessus de la cavité 10, pendant les opérations de débarquement et d'embarquement des passagers à bord de la nacelle 6. Pour permettre l'atterrissage du ballon 1 sur le sol 9, une solution pourrait consister à recouvrir la cavité 10, avec une plate-forme 3 plane tel que cela est illustré sur la figure 1. Dans ce cas, la plate-forme 3 doit nécessairement comporter une ouverture 12 qui permet le passage du câble de rappel 2, et qui est centrée sur l'axe vertical de sortie 12a. Cependant une telle solution présente les inconvénients qui vont à présent être décrits.

Lorsque la nacelle 6 repose sur la plate-forme 3, et que l'on déroule le câble de rappel 2, le ballon 1 s'élève par ses propres moyens dans les airs. Pour le ramener au sol, on procède à l'enroulement du câble 2, sur le tambour principal 11a du treuil. Lors des mouvements d'ascension et de descente du ballon captif 1, la nacelle 6 reste suspendue au câble de charge 7, par l'intermédiaire au moins des suspentes courtes 8a qui sont constamment tendues. En l'absence de vent, le câble de rappel 2 est vertical et confondu avec son axe vertical de sortie 12a ; le cadre de charge 7 reste horizontal, et les suspentes de contreventement 8b restent détendues tant que l'angle que fait le fond 6b de la nacelle 6 avec l'horizontale est inférieur à un angle d'environ 8°. Lorsque cet angle risque de dépasser 8°, du fait par exemple d'un déséquilibre de la nacelle 6 causé par une mauvaise répartition des passagers, les suspentes de contreventement 8b se tendent et empêchent que cette inclinaison du fond 6b de la nacelle 6 par rapport à l'horizontale soit supérieure à 8°. En présence de vent, l'enveloppe hermétique 4 du ballon captif 1 subit des forces de poussées latérales importantes qui provoquent, d'une part une inclinaison d'angle α du câble de rappel 2 par rapport à son axe vertical de sortie 12a, et d'autre part une inclinaison de l'ensemble enveloppe hermétique 4 - cadre de charge 7 d'un angle β par rapport à l'axe vertical de symétrie 6a de la nacelle 6. La nacelle 6 reste horizontale tant que l'angle d'inclinaison β est inférieur ou égal à 8°, ce qui correspond à un angle d'inclinaison α d'environ 30°. Lorsque cette inclinaison du cadre de charge 7 dépasse 8°, les suspentes de contreventement 8b se tendent et la nacelle est entraînée par le cadre de charge 7. Par conséquent, grâce aux suspentes de contreventement 8b, le fond 6b de la nacelle 6 reste toujours sensiblement horizontal, ce qui permet d'assurer le confort des passagers à bord de la nacelle 6.

En présence de vent, lorsque l'on ramène le ballon captif 1 vers le sol en enroulant le câble de rappel 2, la nacelle 6 atterrit sur la plate-forme 3, en étant dans une position décentrée par rapport à l'axe vertical de sortie 12a du câble de rappel 2, tel que cela est illustré sur la figure 1. L'écart entre l'axe de symétrie 6a de la nacelle 6 et l'axe vertical de sortie 12a du câble de rappel 2 est fonction de cet angle α. La taille de la plate-forme 3 doit donc être conçue en fonction de la taille de la nacelle 6, de la mesure maximale de l'angle α et des suspentes 8a.

En l'absence de vent, lorsque la nacelle 6 est posée sur la plate-forme d'atterrissage 3, et que le câble de rappel 2a été suffisamment enroulé sur le tambour principal 11a, les suspentes 8a et 8b sont détendues. En présence de vent, l'enveloppe hermétique 4 et le cadre de charge 7 subissent une déviation par rapport à la verticale. Si la nacelle 6 est centrée par rapport a l'axe vertical de sortie 12a câble de rappel 2, cette déviation ne peut pas occasionner une mise en tension des suspentes 8a, et la nacelle 6 reste parfaitement immobile sur la plate-forme 3. En revanche, si la nacelle 6 est dans une position décentrée par rapport à l'axe vertical de sortie 12a, il arrive que les suspentes 8a qui sont placées sous le vent soient remises en tension par la déviation du cadre de charge 7, ce qui provoque un soulèvement de la nacelle 6 par rapport à la plate-forme 3.

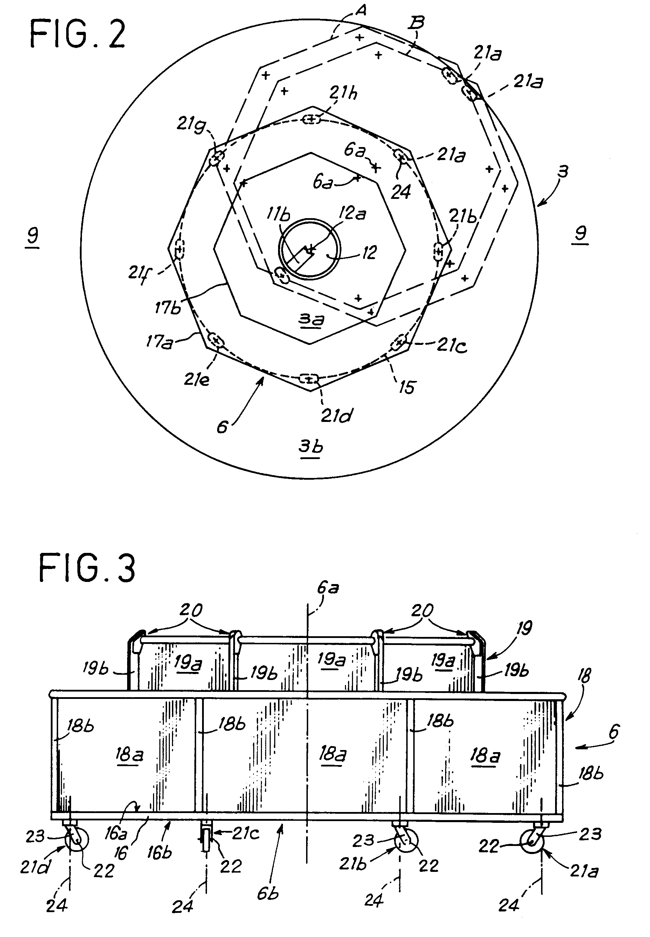

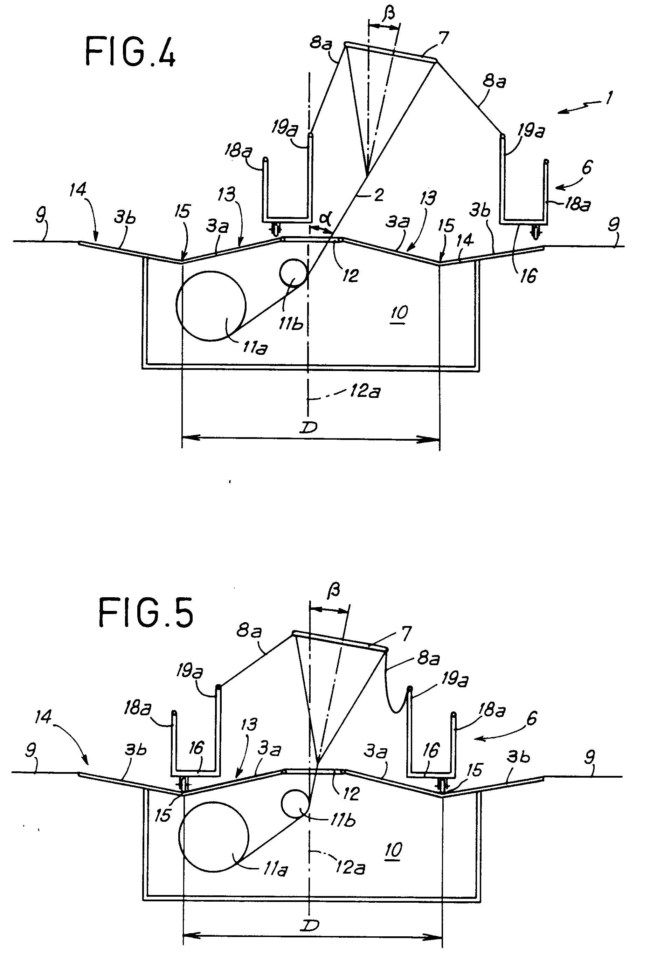

L'installation d'atterrissage de l'invention, dont un mode préféré de réalisation va être à présent décrit, apporte un perfectionnement à l'installation de la figure 1, en ce que la nacelle 6 du ballon captif est équipée de roue articulées, et en ce que la plate-forme d'atterrissage 3 possède un profil particulier qui permet d'obtenir un recentrage de la nacelle 6, par rapport à l'axe vertical de sortie 12a du câble de rappel 2, lors de l'atterrissage. On évite ainsi tout risque de mouvement intempestif de la nacelle, sous l'effet du vent, une fois que celle-ci est posée sur la plate-forme d'atterrissage. Si l'on se réfère aux figures 2 et 4, la plate-forme 3 de l'installation de l'invention n'est pas plane, mais est constituée par la surface courbe extérieure 3a d'un tronc de cône intérieur 13, et la surface courbe intérieure 3b d'un tronc de cône extérieur 14, qui est creux ; ces troncs de cône 13 et 14 sont des troncs de cône droit, centrés sur l'axe vertical de sortie 12a du câble de rappel 2 ; ils sont concentriques, de même conicité, mais inversés l'un par rapport à l'autre, le tronc de cône intérieur 13 étant orienté vers le haut, tandis que le tronc de cône extérieur 14 est orienté vers le bas ; les surfaces courbes 3a et 3b sont sécantes et délimitent au niveau de leur intersection, en contrebas de l'ouverture 12 de sortie du câble de rappel 2, une zone d'atterrissage 15 circulaire, de diamètre D.

Si l'on se réfère aux figures 2 et 3, le fond 6b de la nacelle 6 du ballon captif 1 de l'installation atterrissage de l'invention consiste en une plaque de fond 16, qui est évidée en son centre, et dont les périmètres extérieur 17a et intérieur 17b forment deux octogones concentriques. Sur la face supérieure 16a de cette plaque de fond 16, est fixée une armature métallique extérieure 18 de forme octogonale, et sur laquelle viennent se fixer huit plaques verticales 18a, de telle sorte que chaque plaque 18a prolonge verticalement un côté du périmètre extérieur octogonal 17a de la plaque de fond 16. De manière similaire, une armature métallique intérieure 19 octogonale recevant huit plaques verticales 19a, est montée sur le périmètre intérieur 17b de la plaque de fond 16. Les montants verticaux 19b de l'armature métallique intérieure 19 ont une hauteur plus importante que les montants verticaux 18b de l'armature métallique extérieure 18; leurs extrémités supérieures 20 sont destinées à être fixées à l'une des extrémités des suspentes 8a , à raison d'une suspente 8a par montant vertical 19b , l'extrémité opposée de chaque suspente 8a étant fixée à la périphérie du cadre de charge 7.

La nacelle 6 est en outre équipée de huit roues 21a, 21b, 21c, 21d,21e, 21f, 21g, 21h. Chaque roue est montée libre en rotation selon un axe horizontal 22, sur un support 23, en forme de U renversé. Chaque support 23 est monté pivotant sur la face inférieure 16b de la plaque de fond 16, selon un axe vertical de rotation 24. De la sorte, la position de l'axe de rotation horizontal 22 de chaque roue, peut être quelconque. Les supports 23 des roues 21a à 21h sont en outre fixés sur la face inférieure 16b de la plaque de fond 16 de forme octogonale, de telle sorte que leur axe vertical de rotation 24 soit situé à la fois sur les diagonales de cette plaque 16, et sur un cercle, qui est centré sur l'axe central de symétrie 6a de la plaque de fond 16, et dont le diamètre est égal au diamètre D de la zone d'atterrissage 15. Dans l'exemple particulier illustré à la figure 2, la plaque de fond 16 est dimensionnée par rapport au deux troncs de cône 13 et 14, de telle sorte que ce cercle correspond au cercle inscrit dans le périmètre extérieur 17a de la plaque de fond 16, ce qui permet d'obtenir une très bonne stabilité de la nacelle au sol.

Sur la figure 4, le ballon captif 1 est dans sa phase finale d'approche de la plate-forme 3, en présence de vent. Sa nacelle 6 est donc décentrée par rapport à l'axe vertical de sortie 12a du câble de rappel 2. Aucune des roues de la nacelle 6 n'est encore en contact avec l'une des surfaces courbes 3a ou 3b des troncs de cône 13 et 14. La nacelle 6 est suspendue au cadre de charge 7, toutes les suspentes 8a étant mise en tension. La plaque de fond 16 de la nacelle 6 est dans un plan sensiblement horizontal.

Lorsque l'on continue à effectuer une traction sur le câble de rappel 2, au moins une première roue de la nacelle 6 vient en contact avec l'une des deux surfaces courbes 3a, 3b des deux troncs de cônes 13 et 14. La plaque de fond 16 de la nacelle étant toujours sensiblement horizontale, ce contact se fait, soit à proximité du sol 9 pour la surface courbe 3b du tronc de cône extérieur 14, soit à proximité de l'ouverture 12 de sortie du câble de rappel 2, pour la surface courbe 3a du tronc de cône intérieur 13.

Sur la figure 2, on a représenté en pointillés, deux positions référencées A et B qui peuvent par exemple être prises par le périmètre extérieur 17b de la plaque de fond 16 de la nacelle 6 au moment où celle-ci vient en contact avec la plate-forme d'atterrissage 3. Lorsque la nacelle 6 arrive décentrée par rapport à l'axe de sortie vertical 12 du câble de rappel 2, et dans la position particulière référencée A, seule la roue 21a vient en contact avec la surface courbe 3b du tronc de cône extérieur 14, à proximité immédiate du sol 9. du fait de la portance du ballon 1, la roue 21a peut pivoter autour de son axe vertical de rotation 24, et se positionner dans le sens de la pente de la surface courbe 3b. La nacelle 6, qui est toujours suspendue au cadre de charge 7, poursuit ensuite sa descente, sous l'effet de la gravité et principalement de la traction du câble de rappel 2 sur le cadre de charge 7, jusqu'à la zone d'atterrissage 15 circulaire en contrebas, en étant dirigée à la surface du tronc de cône extérieur 14, par la roue 21a articulée. Pendant cette descente de la nacelle 6 , le tronc de cône intérieur 13 traverse la plaque de fond 16. Il revient en théorie à l'homme du métier de dimensionner l'évidemment de la plaque de fond 16 de la nacelle 6, en fonction de la taille du tronc de cône intérieur 6, et plus particulièrement de son angle de conicité, et de la hauteur des roues articulées de la nacelle, de telle sorte que le tronc de cône intérieur 13 puisse traverser le fond de la nacelle 6 sans venir en contact directement avec la plaque de fond 16 de la nacelle 6. En pratique, la contrainte qui est imposée à la taille de l'évidement de la nacelle 6 pour permettre le passage du câble de rappel 2 lorsque celui-ci prend une inclinaison maximale de 30° par rapport à la verticale, est toujours suffisante pour que le tronc de cône intérieure 13 puisse traverser la nacelle 6. Il est à noter en outre qu'il n'est pas possible, qu'une des roues de la nacelle 6 vienne se loger dans l'ouverture 12 de sortie du câble de rappel 2, qui est pratiquée dans le sommet du tronc de cône intérieur 13. Le tronc de cône intérieur 13 permet par conséquent de protéger le système de treuil 11, et plus particulièrement la poulie de renvoi 11b.

Dans la position référencée B, les deux roues 21a et 21e qui sont diamétralement opposées sont alignées avec l'axe vertical de sortie 12a du câble de rappel 2. La plaque de fond 16 de la nacelle 6 étant sensiblement horizontale, et la distance entre les deux roues 21a, 21e diamétralement opposées étant égale au diamètre D de la zone 15 circulaire, ces deux roues 21a, 21e viennent en contact avec la plate-forme 3. La roue 21a est en contact avec la surface courbe 3b du tronc de cône extérieur 14, à proximité immédiate du sol 9 ; la roue 21e est en contact avec la surface courbe 3a du tronc de cône intérieur 13 à proximité immédiate de l'ouverture 12 de sortie du câble de rappel 2. Dans ce cas, les deux roues 21a et 21e pivotent sur elles-même de manière à se placer dans le sens de la pente de la surface courbe de leur tronc de cône respectif et la nacelle 6 poursuit sa descente, jusqu'à la zone d'atterrissage 15 circulaire, en étant dirigée radialement par les deux roues 21a et 21e, à la surface des deux troncs de cône intérieur 13 et extérieur 14.

Les deux positions caractéristiques d'atterrissage qui viennent d'être décrites en référence à la figure 2, ne sont bien évidemment pas les seules positions pouvant être prises par la nacelle 6 au moment de l'atterrissage. Il est par exemple possible, que la nacelle 6 vienne en contact avec la surface courbe de l'un des deux troncs de cône de la plate-forme d'atterrissage, par l'intermédiaire de deux roues adjacentes, ou de plusieurs paires de roues diamétralement opposées.

Lorsque la nacelle 6 arrive dans la zone d'atterrissage 15 circulaire, toutes ses roues articulées 21a à 21h viennent en contact avec cette zone d'atterrissage 15. La nacelle est alors parfaitement recentrée par rapport à l'axe vertical de sortie 12a du câble de rappel 2. Cette position est celle illustrée à la figure 5. On continue alors à enrouler le câble de rappel 2 jusqu'à ce que toutes les suspentes 8a soient totalement détendues. Ainsi, dans cette position centrée de la nacelle, lorsque les suspentes 8a sont maintenues détendues par la traction du câble de rappel 2, même lorsque le cadre de charge 7 est incliné d'un angle β maximum par rapport à la verticale, les suspentes 8a ne peuvent pas être remises en tension ; la nacelle 6 reste donc parfaitement immobilisée dans la zone d'atterrissage 15 circulaire.

Dans un exemple précis de réalisation, l'angle de conicité entre l'axe de symétrie des troncs de cône 13 ou 14 et leurs surfaces respectives 3a, 3b valait 77° ; le diamètre D de la zone d'atterrissage circulaire valait 5,36 mètres; la distance entre deux sommets opposés du périmètre extérieur 17a de la plaque de fond 16 valait 5,8 mètres ; et la distance entre deux sommets opposés du périmètre intérieur octogonal 17b de la plaque de fond 16 de la nacelle 6 valait 3,96 mètres.

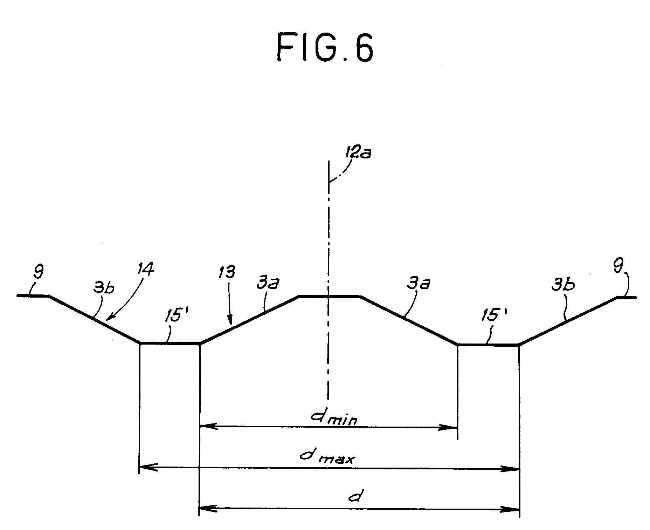

L'invention n'est pas limitée au mode préféré de réalisation qui vient d'être décrit. On pourrait concevoir une plate-forme d'atterrissage avec un unique tronc de cône intérieur 13, le tronc de cône extérieur 14 étant par exemple remplacé par une zone annulaire d'atterrissage horizontale. A l'inverse, on pourrait également concevoir une plate-forme 3 avec un unique tronc de cône extérieur 14, le tronc de cône intérieur 13 étant remplacé par une zone d'atterrissage annulaire horizontale. Il est également possible dans le cadre de l'invention, de concevoir une plate-forme d'atterrissage dans laquelle les surfaces courbes des troncs de cône intérieur 13 et extérieur 14 ne sont pas sécantes, mais reliées par une zone d'atterrissage annulaire 15' horizontale, tel que cela est illustré sur le profil de la figure 6. Dans ce cas, la distance entre deux roues diamétralement opposées de la nacelle 6, par exemple entre les roues référencées 21a et 21e , sera choisie comprise entre le diamètre minimum dₘᵢₙ et le diamètre maximum dₘₐₓ de la zone d'atterrissage annulaire 15'. De préférence cette distance sera choisie égale à la distance inter-cônes d qui correspond à la distance maximale, prise dans un plan horizontal, entre les surfaces courbes des deux troncs de cône intérieur 13 et extérieur 14. Il est à noter que cette distance inter-cônes d correspond au diamètre D de la zone d'atterrissage 15 circulaire, dans le `cas où les surfaces courbes 3a et 3b des deux troncs de cône 13 et 14 sont sécantes.

Enfin la plaque de fond 16 de la nacelle 6 peut être un polygone régulier quelconque. Cette plaque de fond 16 peut également avoir la forme d'un anneau.

## Revendications

1. Ballon captif et son installation d'atterrissage, le ballon captif étant ramené vers le sol (9) au moyen d'un câble de rappel (2), et comportant une nacelle (6) qui est évidée en son centre pour permettre le passage du câble de rappel (2), et l'installation comportant des moyens d'enroulement et de déroulement (11) du câble de rappel (2), qui sont montés dans un cavité (10) du sol, caractérisés en ce que l'installation comprend en outre une plate-forme d'atterrissage (3) recouvrant la cavité (10) et comportant une ouverture (12), à travers laquelle passe le câble de rappel (2) et qui est centrée sur l'axe vertical de sortie (12a) du câble de rappel (2), en ce que d'une part la plate-forme d'atterrissage (3) consiste en la surface courbe (3a, 3b) d'au moins un tronc de cône droit (13, 14), qui se prolonge en contrebas par une zone d'atterrissage annulaire (15, 15') sensiblement horizontale , et qui est centré sur l'axe vertical de sortie (12a) du câble de rappel (2) , et en ce que d'autre part la nacelle (6) du ballon (1) est équipée d'au moins trois roues articulées, qui sont fixées sous la nacelle (6) dans une zone annulaire de même dimension que la zone d'atterrissage (15, 15').

2. Ballon captif et son installation d'atterrissage selon la revendication 1 caractérisés en ce que la surface courbe de la plate-forme d'atterrissage (3) correspond à la surface intérieure (3b) d'un tronc de cône droit (14), creux et orienté vers le bas.

3. Ballon captif et son installation d'atterrissage selon la revendication 1 caractérisés en ce que la surface courbe de la plate-forme d'atterrissage (3) correspond à la surface extérieure (3a) d'un tronc de cône droit (13) orienté vers le haut, et en ce que l'évidement de la nacelle (6) pour le passage du câble de rappel est suffisant pour que la nacelle (6) puisse être traversée par ce tronc de cône (13).

4. Ballon captif et son installation d'atterrissage selon les revendications 2 et 3 caractérisés en ce que les deux troncs de cônes (13, 14) sont concentriques et en ce que la surface courbe extérieure (3a) du tronc de cône (13) orienté vers le haut, dit tronc de cône intérieur, et la surface courbe intérieure(3b) du tronc de cône (14) orienté vers le bas, dit tronc de cône extérieur, sont reliées par une unique zone d'atterrissage annulaire (15, 15').

5. Ballon captif et son installation d'atterrissage selon la revendication 4 caractérisés en ce que les deux troncs de cône intérieur (13) et extérieur (14) ayant la même conicité, la nacelle est équipée d'au moins deux paires de roues articulées, qui sont fixées sous la nacelle selon un cercle, dont le diamètre est égal à la distance inter-cônes (d, D), les deux roues d'une même paire étant diamétralement opposées.

6. Ballon captif et son installation d'atterrissage selon la revendication 4 ou 5 caractérisés en ce que les surfaces courbes extérieure (3a) et intérieure (3b) des deux troncs de cône intérieur (13) et extérieur (14) sont sécantes selon un cercle (15) qui correspond à la zone d'atterrissage.

7. Ballon captif et son installation d'atterrissage selon la revendication 5 ou 6 caractérisés en ce que la base de la nacelle (6) est un polygone régulier à n sommets , et est équipée de n roues articulées, qui sont fixées sur les diagonales du polygone.

8. Ballon captif et son installation d'atterrissage selon la revendication 7 caractérisés en ce que les roues articulées sont fixées sur le cercle inscrit dans le polygone.

9. Ballon captif et son installation d'atterrissage selon la revendication 7 ou 8 caractérisés en ce que la base de la nacelle (6) est un octogone.

## Claims

1. A tethered balloon and landing installation therefor, the tethered balloon being brought back towards the ground (9) by means of a return cable (2), and including a gondola (6) which has a hollow center through which the return cable (2) passes, and the installation including means (11) for winding out and in the return cable (2), which means are mounted in a cavity (10) in the ground, the balloon and installation being characterized in that the installation further comprises a landing platform (3) covering the cavity (10) and including an opening (12) through which the return cable (2) passes and which is centered on a vertical outlet axis (12a) for the return cable (2), in that firstly the landing platform (3) is constituted by the curved surface (3a, 3b) of at least one right truncated cone (13, 14) which is extended at its bottom by a substantially horizontal annular landing zone (15, 15') and which is centered on the vertical outlet axis (12a) for the return cable (2), and in that, secondly, the gondola (6) of the balloon (1) is fitted with at least three swivel-mounted wheels which are fixed beneath the gondola in an annular zone having the same dimensions as the landing zone (15, 15').

2. A tethered balloon and landing installation therefor according to claim 1, characterized in that the curved surface of the landing platform (3) corresponds to the inside surface (3b) of a downwardly directed hollow right truncated cone (13).

3. A tethered balloon and landing installation therefor according to claim 1, characterized in that the curved surface of the landing platform (3) corresponds to the outside surface (3a) of an upwardly directed right truncated cone (13), and in that the recess in the gondola (6) for passing the return cable is large enough to enable the gondola (6) to have said truncated cone (13) pass therethrough.

4. A tethered balloon and landing installation therefor according to claims 2 and 3, characterized in that the two truncated cones (13, 14) are concentric and in that the outside curved surface (3a) of the upwardly directed truncated cone (13), referred to as the "inner" truncated cone, and the inside curved surface (3b) of the downwardly directed truncated cone (14) referred to as the "outer" truncated cone, are interconnected by a single annular landing zone (15, 15').

5. A tethered balloon and landing installation therefor according to claim 4, characterized in that the inner and outer truncated cones (13, 14) have the same angle at the apex, the gondola is fitted with at least two pairs of swivel-mounted wheels which are fixed beneath the gondola around a circle, the diameter of the circle being equal to the inter-cone distance (d, D), with the two wheels in each pair being diametrically opposite.

6. A tethered balloon and landing installation therefor according to claim 4 or 5, characterized in that the outside and inside curved surfaces (3a, 3b) of the two inner and outer truncated cones (13, 14) intersect at a circle (15) which corresponds to the landing zone.

7. A tethered balloon and landing installation therefor according to claim 5 or 6, characterized in that the base of the gondola (6) is a regular polygon having n vertices, and is fitted with n swivel-mounted wheels which are fixed on the diagonals of the polygon.

8. A tethered balloon and landing installation therefor according to claim 7, characterized in that the swivel-mounted wheels are fixed on the inscribed circle of the polygon.

9. A tethered balloon and landing installation therefor according to claim 7 or 8, characterized in that the base of the gondola (6) is an octagon.

## Patentansprüche

1. Fesselballon mit Verankerungsvorrichtung, wobei der Fesselballon mit Hilfe eines Halteseils (2) am Boden (9) gehalten wird und eine Gondel (6) trägt, die mittig ausgespart ist, um den Durchgang des Halteseils (2) zu ermöglichen, und wobei die Vorrichtung eine Aufwickel/Abwickel-Einrichtung (11) für das Halteseil (2) aufweist, die in einer Ausnehmung (10) im Boden gelagert ist, **dadurch gekennzeichnet**, daß die Vorrichtung außerdem aufweist: ein Bodengestell (3), welches die Ausnehmung (10) abdeckt und eine Öffnung (12) aufweist, durch die hindurch das Halteseil (2) verläuft, und die bezüglich der vertikalen Austrittsachse (12a) des Halteseils (2) zentriert ist, daß einerseits das Bodengestell (3) aus einer Kurvenfläche aus mindestens einem geraden Kegelstumpf (13, 14) besteht, der sich nach unten in Richtung auf eine ringförmige Verankerungszone (15, 15'), die etwa horizontal verläuft, erstreckt und bezüglich der vertikalen Austrittsachse (12a) des Halteseils (2) zentriert ist, und daß andererseits die Gondel (6) des Ballons (1) mit mindestens drei gelenkig gelagerten Rädern ausgestattet ist, die unterhalb der Gondel (6) in einer Ringzone fixiert sind, die die gleiche Abmessung besitzt wie die Verankerungszone (15, 15').

2. Fesselballon mit Verankerungsvorrichtung nach Anspruch 1, **dadurch gekennzeichnet**, daß die Kurvenfläche des Verankerungsbodengestells (3) der Innenfläche (3b) eines geraden, hohlen und nach unten orientierten Kegelstumpfs (14) entspricht.

3. Fesselballon mit Verankerungsvorrichtung nach Anspruch 1, **dadurch gekennzeichnet**, daß die Kurvenfläche des Verankerungsbodengestells (3) der Außenfläche (3a) eines geraden Kegelstumpfs (13) entspricht, der nach oben orientiert ist, und daß die Aussparung in der Gondel (6) zum Durchlassen des Halteseils ausreicht, damit die Gondel (6) von dem Kegelstumpf (13) durchsetzt werden kann.

4. Fesselballon mit Verankerungsvorrichtung nach Anspruch 3 und 4, **dadurch gekennzeichnet,** daß die zwei Kegelstümpfe (13, 14) konzentrisch sind, und daß die gekrümmte Außenoberfläche (3a) des nach oben orientierten Kegelstumpfs (13), also der innere Kegelstumpf, und die gekrümmte Innenfläche (3b) des nach unten orientieren Kegelstumpfs (14), das heißt, des äußeren Kegelstumpfs, über eine einzige ringförmige Verankerungszone (15, 15') miteinander verbunden sind.

5. Fesselballon mit Verankerungsvorrichtung nach Anspruch 4, **dadurch gekennzeichnet**, daß die zwei Innen- und Außenkonuse (13, 14) gleiche Konizität aufweisen, daß die Gondel mit mindestens zwei Paaren von gelenkig gelagerten Rädern ausgestattet ist, die unterhalb der Gondel auf einem Kreis fixiert sind, dessen Durchmesser mit dem Zwischenkonusdurchmesser (d, D) übereinstimmt, wobei die beiden Räder eines Paares einander diametral gegenüberliegen.

6. Fesselballon mit Verankerungsvorrichtung nach Anspruch 4 oder 5, **dadurch gekennzeichnet**, daß die gekrümmten Außenflächen (3a) und Innenflächen (3b) des Innenkonus und des Außenkonus (13, 14) sich auf einem Kreis (15) schneiden, welcher der Verankerungszone entspricht.

7. Fesselballon mit Verankerungsvorrichtung nach Anspruch 5 oder 6, **dadurch gekennzeichnet**, daß die Basis der Gondel (6) ein regelmäßiges Polygon mit n Ecken ist, und daß sie mit n gelenkig gelagerten Rädern ausgestattet ist, die an den Diagonalen des Polygons fixiert sind.

8. Fesselballon mit Verankerungsvorrichtung nach Anspruch 7, **dadurch gekennzeichnet**, daß die gelenkig gelagerten Räder auf dem Inkreis des Polygons fixiert sind.

9. Fesselballon mit Verankerungsvorrichtung nach Anspruch 7 oder 8, **dadurch gekennzeichnet**, daß die Basis der Gondel (6) ein Achteck bildet.
